# EUROPEAN PATENT APPLICATION

(11) **EP 3 637 369 A1**
(43) Date of publication of application: **15.04.2020**
(21) Application number: 18199669.5
(22) Date of filing: 10.10.2018
(51) Int. Cl.: G06T 11/00, G06K 9/40, G06T 5/00

(54) **DEEP LEARNING-BASED KERNEL SELECTION FOR SCATTER CORRECTION IN X-RAY IMAGING**

(71) Applicant: Koninklijke Philips N.V., 5656 AG Eindhoven (NL)
(72) Inventor: PRINSEN, Peter, 5656 AE Eindhoven (NL); GOEDICKE, Andreas, 5656 AE Eindhoven (NL); WIEGERT, Jens, 5656 AE Eindhoven (NL)
(74) Representative: de Haan, Poul Erik

(57) **Abstract**

A classification system is disclosed comprising an input unit for receiving image data comprising a plurality of pixels, a classifier device for classifying at least one of said plurality of pixels based on one or more scatter properties of said at least one pixel, wherein each of the classes used for classification correspond to a particular scatter kernel, thereby selecting a scatter kernel for said at least one pixel, and an output unit for outputting an indication of a classification result of said scatter classification for the particular pixel.

## Description

### FIELD OF THE INVENTION

The present invention relates to a system for classifying scatter images in order to provide scatter kernel selection, in particular in the case of multiple scatter, a corresponding method and respective computer program. More specifically, the usage of a classifier device to perform the scatter kernel selection based on previous training using a simulated training dataset is addressed.

### BACKGROUND OF THE INVENTION

Diagnostic imaging using X-ray radiation is an important tool for gathering information about a patient's medical state. In order to obtain reliable diagnostic information, X-ray images having a high image quality are generally desired.

There are several factors influencing image quality degradation in X-ray imaging. One major factor is the occurrence of scatter during X-ray imaging. In order to reduce said scatter, hardware solutions such as anti-scatter grids (ASG) are often applied. Unfortunately, these anti-scatter grids do not eliminate all scatter.

Thus, in addition to hardware solutions, software methods are used to further reduce scatter. Hereby, a typically applied approach is the use of the so-called kernel-based scatter correction. That is, kernels are selected for a diagnostic image collected by a particular detector, whereby these kernels allow to form an estimate of the total scatter on the detector. Hereby, the kernel selection is typically performed based on local properties of the detector signal during image acquisition such as the local signal strength and the signal gradient. This approach has proven to work sufficiently well for single scatter, which - at least in the presence of an ASG - depends on the local properties of the object of which an image is acquired.

In contrast to single scatter, though, multiple scatter can depend on properties that are further away from the primary beam. As it is generally difficult to determine how these properties should be accounted for when selecting a kernel, the kernel-based method does not yield sufficiently good scatter correction for multiple scatter events.

### SUMMARY OF THE INVENTION

As described herein above, a major problem of scatter kernel selection in the case of multiple scatter is the fact that it is not fully clear how the properties of the object causing the multiple scatter shall be accounted for during scatter kernel selection. Accordingly, current approaches for multiple scatter correction lack accuracy.

It is therefore an object of the present invention to provide an approach which allows to perform scatter kernel selection in a reliable and appropriate manner. More particularly, it is an object of the present invention to provide a system and method for appropriate scatter kernel selection in the case of multiple scatter events. Even more particularly, it is an object of the present invention to provide a system and method allowing to select a scatter kernel that represents the scatter in each pixel of image data that has been obtained using an X-ray imaging modality.

This objective is achieved by a classification system comprising: an input unit for receiving image data comprising a plurality of pixels, a classifier device for classifying at least one pixel of the plurality of pixels based on one or more scatter properties of said at least one pixel, wherein the classifying comprises selecting a scatter kernel from a plurality of scatter kernels for said at least one pixel, and an output unit for outputting, for the at least one pixel, an indication of a classification result of said scatter classification. In some embodiments, the image data is obtained using X-ray imaging.

In accordance with the above, a classifier device, in particular a neural network device, is used to select the scatter kernels. Neural network devices are particularly beneficial for this purpose as they are capable of being trained and, thereby, learning any relevant properties and features to be considered when selecting the appropriate kernel. This allows the device to select a scatter kernel without any necessity of explicitly determining, prior to the selection, the properties to be used for selecting the scatter kernels. This particularly improves scatter kernel selection in previously unseen cases.

In this context, the term classifier device may particularly be interpreted as a device implementing a machine learning algorithm. Even more particularly, the term may refer to a device implementing one or more neural networks (i.e. one neural network or a collection of neural networks) having multiple neural network nodes.

The classifier device may particularly be a unit of a classification system also comprising an input unit and an output unit. The input unit may particularly be configured to receive image data comprising a plurality of pixels. To that end, the term image data may particularly refer to one or more images, even more particularly one or more images obtained using a respective detector. These images typically consist of a plurality of pixels, whereby the amount of pixels in one particular image may vary depending on the detector.

In some embodiments, the term image data may also refer to only a part of an image, such as a part of a detector image. The part of the image may particularly comprise one or more pixels for which scatter correction shall be performed, i.e. for which a sufficient scatter kernel shall be selected.

The image data comprising the plurality of pixels may be provided to the classifier device. In some embodiments, the classifier device may then classify one or more pixels of the plurality of pixels in the image data and may select, using a machine learning approach, an appropriate scatter kernel for the different pixels. More specifically, the classifier device may be considered to select a scatter kernel from a plurality of scatter kernels. Hereby, the plurality of scatter kernels particularly corresponds to a predefined set of scatter kernels, i.e. a set of scatter kernels that has been pre-selected as potentially suitable for a particular pixel. That is, the plurality of scatter kernels, and, thus, the predetermined set of scatter kernels, may be predetermined on a per-pixel basis. Accordingly, a pixel may be classified to a scatter kernel with the plurality of scatter kernels representing the class used for that pixel.

Using machine learning, a scatter kernel may be selected per pixel in the image data. Subsequently, the scatter kernels for all pixels may be summed to estimate the scatter distribution of the detector with which the image data has been obtained. In that respect, it shall be understood that one may distinguish between the term pixel as used herein, i.e. a pixel which corresponds to a pixel in the image data and the term physical pixel as used to describe the physical detector pixels of a particular detector.

The output of the scatter kernel selection may in particular be provided in the shape of an output vector provided per pixel which is provided with an entry for each scatter kernel of the plurality of scatter kernels. For this purpose, a variety of options for said output vector may be imagined. In some embodiments, each output vector may comprise binary entries. In some embodiments, each output vector may comprise entries indicative of a goodness of fit of each scatter kernel. In some embodiments, each output vector may comprise entries indicative of a probability that the respective scatter kernel is the best scatter kernel for scatter correction.

In some embodiments, the classifier device is configured to receive training data indicating a relation between each scatter kernel from the plurality of scatter kernels and the one or more scatter properties of said at least one pixel. In some embodiments, the training data is generated by simulating the scatter properties of said at least one pixel using a simulation of pencil beams. In this case, the simulation may particularly include simulating one or more simulation objects in a plurality of constellations of the pencil beam and the object.

In order to allow the classifier device to assign the scatter kernels with their respective values, the classifier device first has to be trained with a ground truth for classification of the plurality of pixels of one particular detector.

That is, the classifier device may be trained using respective training data sets. In some embodiments, the training data sets comprise images having similar properties as the images for which scatter correction shall be performed, thereby allowing to serve as a ground truth. For this purpose, the images in the training data set have to be generated under controlled conditions. In some embodiments, the training data set including the training images is generated by Monte-Carlo (MC) simulation on one or more phantoms and/or on reconstructions of real patient data. In some embodiments, other simulation methods may be used such as the Linear Poisson Boltzmann Equation. In some embodiments, the training data may be generated via dedicated measurements, e.g. by using pencil beam setups or wide versus narrow collimation methods or the like.

More specifically, the simulation encompasses a simulation of pencil beams with the scatter on the respective detector (for which the classification system is trained) being recorded for a plurality of anatomy configurations. Hereby, the detector image corresponds to the sum of all primary pencil beam images.

Based on these simulations, it is possible to determine, for each relevant pixel, which scatter kernel fits best for which local anatomy constellation, i.e. which scatter kernel may be used for which pixel to appropriately perform scatter correction.

For this purpose, a goodness of fit measure may particularly be used. In some embodiments, the goodness of fit measure may be the sum of the squared differences between the actual scatter image and the scatter image that is given by the scatter kernel. In some embodiments, the goodness of fit measure may be the weighted sum of said squared difference. In some embodiments, the goodness of fit measure may also take into account scatter events that passed the plane of the detector beyond, i.e. outside, the detector area. This may further improve the scatter kernel correction determination. Using the goodness of fit measure, it is possible to determine the above-mentioned ground truth output.

In some embodiments, the indication of the result of said scatter classification and respective scatter kernel selection for the at least one pixel comprises a vector having, for each scatter kernel of the plurality of scatter kernels, an entry indicative of the classification result. In some embodiments, the entry indicative of the classification result indicates a goodness of fit for each scatter kernel to the one or more scatter properties of said at least one pixel. In some embodiments, the entry indicative of the classification result indicates a probability of the scatter kernel being the best scatter kernel to be applied to said at least one pixel.

As indicated herein above, the output provided by the classification system may particularly be a vector comprising an entry for each kernel. In some embodiments, this vector may be provided as having binary entries. Hereby, the entry for the best scatter kernel determined may be provided as a "1" and the remaining entries (for the less good) scatter kernels may be provided as a "0". In this case, the scatter kernel to be selected for that particular pixel shall be the scatter kernel having the entry "1".

In some embodiments, each vector may have binary entries, whereby multiple entries are assigned with a "1", with "1" indicating that a scatter kernel of the plurality of scatter kernels is suitable for appropriate scatter correction. The remaining entries, assigning the scatter kernels that do not provide suitable scatter correction, are provided with a "0" in this case. The scatter kernel may then be selected at random from all scatter kernels having an entry of "1" in the respective vector.

In some embodiments, the entries in each vector may indicate the probability that the corresponding scatter kernel is the kernel most suitable for scatter correction. That is, each entry (representing one particular scatter kernel) may be assigned a probability value. In this case, the scatter kernel may be selected based on said probability. More specifically, the scatter kernel having the highest probability of being suitable may be selected.

In some embodiments, the entries in each vector may be the goodness of fit of the corresponding scatter kernel for the corresponding scatter event in the corresponding pixel, i.e. may indicate how well the particular scatter kernel represents the scatter. In this particular case, the scatter kernel (i.e. the vector entry) shall be selected which indicates the best goodness of fit. Typically, the goodness of fit is indicated by means of a value that gets lower the better the goodness of fit is. As such, the scatter kernel shall be selected which is assigned the entry with the lowest value.

It shall be understood that, in the above cases, the ground truth output provided during training shall correspond to the actual scatter correction output. That is, the ground truth output (for each pixel) may also correspond to a vector having an entry for each scatter kernel.

To that end, this vector may again be binary, i.e. comprising a "1" for the best scatter kernel and a "0" for all other scatter kernels. In this case, the value of "1" may typically be assigned to the scatter value with the best (i.e. lowest) goodness of fit value determined from simulation and the value of "0" may be assigned for all others.

In some embodiments, the vector may be binary, but may have multiple entries with "1", namely for all scatter kernels that are suitable for scatter correction. In this case, the multiple entries with value "1" should be assigned to the N scatter kernels having the best goodness of fit value and the remaining entries (i.e. "0") should be assigned to the scatter kernels with worse goodness of fit. In some embodiments, the amount N of the scatter kernels being good enough may be determined using a threshold value for the goodness of fit, i.e. the value of N is selected based on how many of the scatter kernels have a goodness of fit below a certain threshold value.

In some embodiments, the ground truth output may be a vector comprising entries indicating the goodness of fit for each scatter kernel. In some embodiments, the ground truth output may be a function of the goodness of fit.

In some embodiments, the classifier device is trained to provide the classification result for each pixel of the plurality of pixels.

In some embodiments, the classifier device may comprise a classifier, in particular a neural network device, that is applied to select an appropriate scatter kernel for each pixel in the image data. That is, the same neural network device is used to classify each pixel.

In this case, the image data provided as input for the classification system may correspond to a part of the detector image, whereby this part is typically extracted from the detector image as a whole such that the pixel for which the classifying unit is supposed to perform scatter kernel selection is always at the same position, i.e. the relative position of the pixel to be classified is the same for each classifying unit. In some embodiments, the pixel to be classified may particularly be located in the center of the image data.

To that end, it shall be understood that this may lead to image data having parts that are not covered by the detector - for example in the case where the pixel to be classified is situated close to the detector image's border. These parts may be filled with other values in order to account for this non-coverage by the detector, for example with respective zeros.

It shall also be understood that the extracted part forming the image data input for this embodiment may also be as large as the detector image itself such that when the pixels to be considered are situated in the center of the detector image, the detector image itself may be used as input. The extracted part forming the image data input may also be larger than the detector image. In this case, parts of the image data will always comprise respective values, such as zeros, indicating that these parts are not covered by the detector image.

In some embodiments, the classifier device comprises a plurality of classifying units, wherein each classifying unit is trained to provide the classification result for a particular pixel of the plurality of pixels.

In some embodiments, the classifier device comprises a plurality of classifying units, in particular a plurality of neural network devices. Hereby, each one of the plurality of the classifying units is used to perform machine-learning based scatter kernel selection for one particular pixel in the plurality of pixels. That is, a classifying unit, in particular a neural network, is provided for each pixel to be corrected.

In this case, the image data provided as input to the classification system may typically correspond to an entire detector image for which each pixel has to be corrected. The neural network device then regards one pixel in the image data after another and provides a respective classification output indicating, for each pixel, the goodness of fit of each scatter kernel of the plurality of scatter kernels.

In some embodiments, a classifying unit may be separately provided for each pixel to be classified. In some embodiments, the mirror symmetries of a detector may be considered when providing the classifying units for each pixel. That is, due to the mirror symmetry, the classifying unit used for a first pixel may also be used for a second pixel that corresponds to a mirrored pixel to said first pixel. This allows to reduce the number of classifying units. That means that fewer classifying units, which are typically implemented as neural network devices, have to be trained, thereby reducing the amount of necessary training data. Also, by reducing the number of classifying units the amount of storage necessary to store the units may be reduced, thereby leading to less memory usage.

In some embodiments, the classifier system is further configured to obtain an estimate of a scatter distribution for a particular detector type based on the plurality of scatter kernels selected for the plurality of pixels. More specifically, the estimate may typically be provided for the particular detector type and a particular type of X-ray system.

In some embodiments, the scatter kernel selection may particularly be used to provide an estimation of the scatter distribution. This may be performed by determining a sum or a weighted sum over the scatter kernels that have been selected for all pixels of the detector image. In some embodiments, the thus determined scatter distribution may be graphically presented to a user on a respective display device. In some embodiments, the user may also change the scatter kernel selection for one or more pixels based on the graphical representation and the graphical representation may be accordingly adjusted. This allows the user to gain a better understanding of the corrections that have been performed.

In some embodiments, the plurality of scatter kernels comprises sphere scatter kernels and/or ellipse scatter kernels.

The above-described scatter correction using kernels may be performed with a variety of different scatter kernels. In some embodiments, the scatter kernels may particularly correspond to sphere kernels as typically used for scatter-correction using kernels. Hereby, the scatter kernels that are very similar to others according to the goodness of fit measure may be removed, thereby decreasing the size of the plurality of scatter kernels to select from. That is, the use of sphere kernels for scatter correction may be particularly beneficial from a memory usage point of view as using sphere kernels may generally allow to use a smaller number of kernels.

In some embodiments, the plurality of scatter kernels may also comprise one or more ellipse scatter kernels. Ellipse kernels are more general compared to sphere kernels. Thus, they may render a more precise scatter correction, but may require a larger number of kernels and, thus, an increased computational load compared to the use of sphere scatter kernels.

It shall further be understood that the scatter image data obtained from simulation using pencil beams may be used to create a corresponding scatter kernel set for that particular detector, i.e. to define the plurality of scatter kernels to select from. For this purpose, the simulated image data should be selected such that they are different enough from one another to allow for such scatter kernel creating of multiple scatter kernels. One measure to determine that they are different enough would, again, be the goodness of fit. According to a further aspect, a classification method is provided, the method comprising the steps of receiving image data comprising a plurality of pixels, classifying at least one pixel of the plurality of pixels based on one or more scatter properties of said at least one pixel. wherein the classifying comprises selecting a scatter kernel from a plurality of scatter kernels for said at least one pixel and outputting, for the at least one pixel, an indication of a classification result of said scatter classification. In some embodiments, the method further comprises the step of training a classifier device with a relation between each scatter kernel from the plurality of scatter kernels and the one or more scatter properties of said at least one pixel.

According to an even further aspect, a computer program is provided for controlling a classification system as described above, which, when executed by a processing unit, is adapted to perform the method as described herein above. Further, a computer-readable medium having stored thereon said computer program is provided.

It shall be understood that the classification system of claim 1, the classification method of claim 12, the computer program of claim 14 and the computer-readable medium of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 schematically illustrates a system for determining scatter kernels for image data including a plurality of pixels according to an embodiment,
Fig. 2 schematically illustrates a flow chart of a method for classifying a plurality of scatter kernels for a plurality of pixels in said image data,
Fig. 3 schematically illustrates a system for determining scatter kernels for image data including one or more pixels according to a further embodiment, and
Fig. 4 represents a flow chart for a method for classifying a plurality of scatter kernels for one or more pixels in said image data.

### DETAILED DESCRIPTION OF EMBODIMENTS

The illustration in the drawings is schematic. In different drawings, similar or identical elements are provided with the same reference numerals.

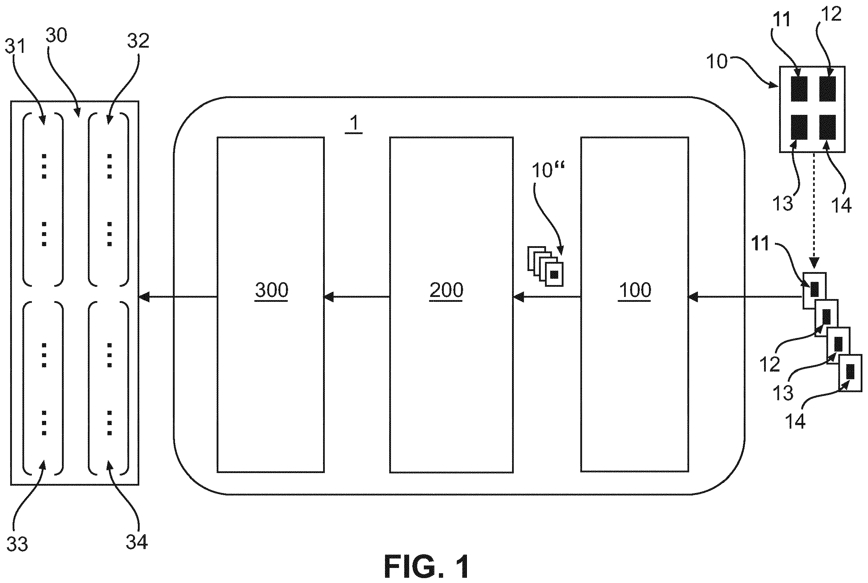

Fig. 1 illustrates a classification system 1 for determining scatter kernels for image data including a plurality of pixels according to a first embodiment. The classification system 1 comprises an input unit 100, a classifier device 200 and an output unit 300.

In the exemplary embodiment according to Fig. 1, classifier device 200 receives, via input unit 100, image data 10'. The image data 10' has been derived from image data 10, which, in the exemplary embodiment according to Fig. 1, has been acquired using an X-ray imaging modality. To that end, image data 10' comprises a plurality of image data extracts, each comprising at least one pixel of the plurality of pixels comprised in X-ray image data 10 for which a scatter kernel shall be selected.

In the exemplary embodiment according to Fig. 1, image data 10' comprises a plurality of image data extracts for pixels 11, 12, 13 and 14 of the X-ray image data 10. Hereby, pixels 11, 12, 13 and 14 are each provided at the same relative position of the particular image data extract. In the exemplary embodiment of Fig. 1, the pixels are provided in the center of the extract.

In order to perform scatter correction for each one of the pixels 11, 12, 13 and 14, the plurality of image data extracts are provided to input unit 100. Input unit 100 then provides the first extract with pixel 11 in its center, the second extract with pixel 12 in its center, the third extract with pixel 13 in its center and the fourth extract with pixel 14 in its center to classifier device 200 for scatter kernel selection for each of these pixels. Classifier device 200 then classifies pixel 11, pixel 12, pixel 13 and pixel 14, that is the pixels situated in the center of the image extracts, one after another.

In the exemplary embodiment according to Fig. 1, classification system 1 provides the classification result in terms of a binary vector. That is, classifier device 200 regards the goodness of fit determined for each scatter kernel and assigns a value of 1 to all scatter kernels that would be good enough to correct for scatter in the pixel and a value of 0 to all other kernels.

That is, in the exemplary embodiment of Fig. 1, classifier device 200 determines a goodness of fit for each scatter kernel in the plurality of scatter kernels provided for pixel 11. Subsequently, classifier device 200 considers the determined goodness of fit of each scatter kernel and compares it to a corresponding threshold value. Depending on whether or not the goodness of fit is below the threshold value, classifier device 200 then assigns a value of 1 or 0 to a particular scatter kernel for pixel 11. That is, classifying unit assigns a value of 1 to all scatter kernels that would be good enough to correct for scatter in the pixel 11 and a value of 0 to all other kernels. The same procedure is then repeated for pixels 12, 13 and 14.

Output unit 300 then receives these values and outputs respective vectors from classification system 1. That is, output unit 300 provides an output 30 comprising a vector 31 indicating a classification result for all scatter kernels of the plurality of scatter kernels for pixel 11, a vector 32 indicating a classification result for all scatter kernels of the plurality of scatter kernels for pixel 12, a vector 33 for pixel 13 and a vector 34 for pixel 14.

Scatter kernel selection may then be performed by selecting, from the output one scatter kernel having a value of 1 at random. To that end, the selection may be performed by a user. Alternatively, or additionally, the system may select a scatter kernel and may either apply the selected kernel to the respective pixel directly or may prompt the user to confirm said selection.

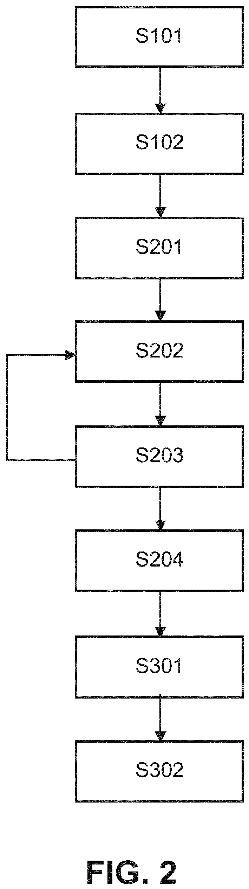

Fig. 2 illustrates a flow chart of a method for classifying a plurality of scatter kernels for a plurality of pixels according to the first embodiment. In the exemplary embodiment according to Fig. 2, image data 10 comprising a plurality of pixels 11, 12, 13 and 14 is received at input unit 100 at step S101. In step S102, image data 10' is derived from image data 10. Image data 10' comprises a plurality of image data extracts, each comprising at least one pixel of the plurality of pixels of image data 10.

In step S201, the image data 10' is provided to classifier device 200. In step 202, classifier device 200 determines, based on the previously trained ground truth, a goodness of fit for each scatter kernel in the plurality of scatter kernels, the goodness of fit representing how well the scatter kernel estimates the scatter in the particular pixel and assigns said goodness of fit to each scatter kernel. That is, classifier device 200 maps, for each pixel, each scatter kernel to a respective goodness of fit measure. This is achieved by classifier device 200 providing a classification of one pixel after another. In the specific embodiment according to Fig. 2, this means that classifier device 200 first determines a goodness of fit of each scatter kernel for pixel 11 which is provided in a first image data extract of the plurality of image data extracts.

In step S203, classifier device 200 then generates a corresponding output indicative of the classification result for pixel 11. In the specific embodiment of Fig. 2, classifier device 200 particularly regards the goodness of fit measure determined for each scatter kernel for pixel 11 and compares said goodness of fit measure to a corresponding threshold. If classifier device 200 determines the goodness of fit to be below said threshold (whereby lower values indicate a better goodness of fit), classifier device 200 indicates the corresponding scatter kernel with a value of 1. If classifier device 200 determines the goodness of fit to be above said threshold, classifier device 200 sets the value of the corresponding scatter kernel in the output to 0. By means of this process an output indicative of the goodness of fit of each scatter kernel is generated for pixel 11.

Subsequently, classifier device 200 determines a goodness of fit for each scatter kernel for pixel 12 which is comprised in a second image data extract and generates an output indicative of the goodness of fit of each scatter kernel for pixel 12 as described above. In the exemplary embodiment of Fig. 2 this process is repeated for pixels 13 and 14 as well.

That is, classifier device 200 repeats steps S202 and S203 until the goodness of fit of each scatter kernel has been determined and an output indicative thereof has been provided for each pixel in the image data. Then, classifier device 200 provides the classification result to output unit 300 in step S204.

In step S301, output unit 300 generates, for each pixel, a corresponding vector having binary entries - a value of 1 for each scatter kernel that is suitable for scatter correction in said pixel and a value of 0 for all other scatter kernels. In step S302, output unit 300 outputs the plurality of vectors - one for each pixel - indicating the goodness of fit for each scatter kernel of the plurality of scatter kernels. This output may be transferred to a display device to represent the results to a user, who may then manually select the scatter kernels or to a further correction device that selects the scatter kernels for each pixel automatically.

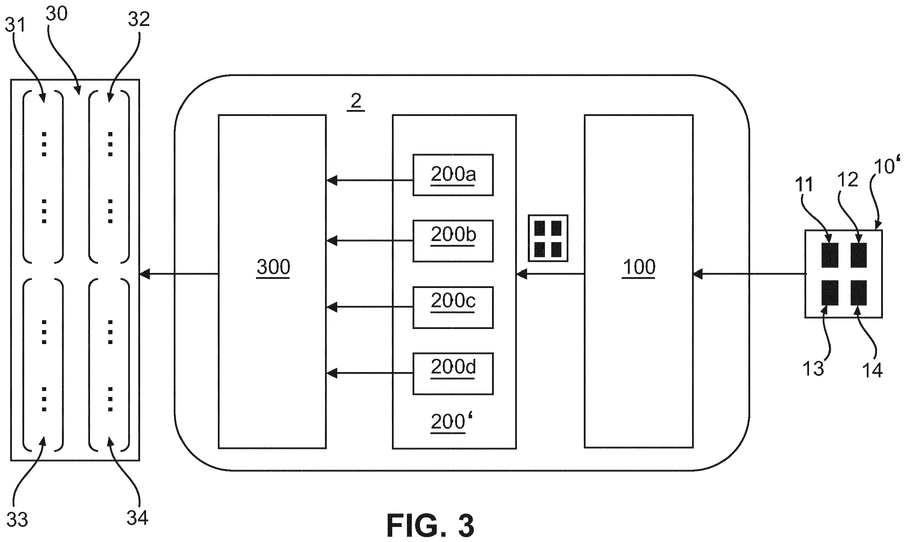

Fig. 3 illustrates a system for performing scatter kernel selection for image data including one or more pixels according to another embodiment. In the exemplary embodiment according to Fig. 3, the classification system 2 comprises an input unit 100, a classifier device 200' comprising a plurality of classifying units 200a, 200b, 200c and 200d, and an output unit 300.

In the exemplary embodiment according to Fig. 3, classifier device 2 receives, via input unit 100, respective image data 10. The image data 10 corresponds to an X-ray image acquired using a particular detector and suffering from multiple scatter. The image data 10 comprises a plurality of pixels 11, 12, 13 and 14 for which scatter correction shall be performed.

In the exemplary embodiment of Fig. 3, each one of the previously trained classifying units 200a, 200b, 200c and 200d is dedicated to classify one particular pixel in the image data 10. That is, classifying unit 200a is used to classify pixel 11, classifying unit 200b is used to classify pixel 12, classifying unit 200c is used to classify pixel 13 and classifying unit 200d is used to classify pixel 14 determines, for each scatter kernel, a goodness of fit for the scatter in that pixel.

Each classifying unit 200a, 200b, 200c and 200d implements its own machine learning algorithm. In the exemplary embodiment of Fig. 3, each classifying unit 200a, 200b, 200c and 200d particularly implements a respective neural network. That is, classifier device 200 comprises four neural networks, whereby each neural network is used for scatter kernel selection of one particular pixel of the detector image.

Accordingly, each classifying unit 200a, 200b, 200c and 200d has previously been trained with a ground truth for its respective pixel for the corresponding detector that is used for acquiring the image data 10. That is, classifying unit 200a has been trained with a ground truth for pixel 11, classifying unit 200b has been trained with a ground truth for pixel 12, classifying unit 200c has been trained with a ground truth for pixel 13 and classifying unit 200d has been trained with a ground truth for pixel 14.

Classifying unit 200a thus determines a goodness of fit for pixel 11 to each scatter kernel of the plurality of scatter kernels. Subsequently, classifying unit 200a considers the determined goodness of fit of each scatter kernel and compares them to a corresponding threshold value. Depending on whether or not the goodness of fit is below the threshold value, classifying unit 200a assigns a value of 1 or 0 to a particular scatter kernel for pixel 11. That is, classifying unit assigns a value of 1 to all scatter kernels that would be good enough to correct for scatter in the pixel and a value of 0 to all other kernels. The same procedure is performed by classifying unit 200b for pixel 12, classifying unit 200c for pixel 13 and by classifying unit 200d for pixel 14.

Classifier device 200 then outputs the corresponding indication of the goodness of fit (in binary terms) determined by the classifying units to the output unit 300.

Output unit 300 then receives these values from classifier device 200 and provides respective outputs from classification system 2. In the exemplary embodiment of Fig. 3, the output is similar to the output of the exemplary embodiment according to Fig. 1, albeit the manner in which the output was generated and the input from which it was generated has been slightly modified. That is, output unit 300 provides an output 30 comprising a vector 31 indicating a classification result for all scatter kernels or pixel 11, a vector 32 for pixel 12, a vector 33 for pixel 13 and a vector 34 for pixel 14. Scatter kernel selection may hereby again be performed by selecting, from the output one scatter kernel having a value of 1 at random.

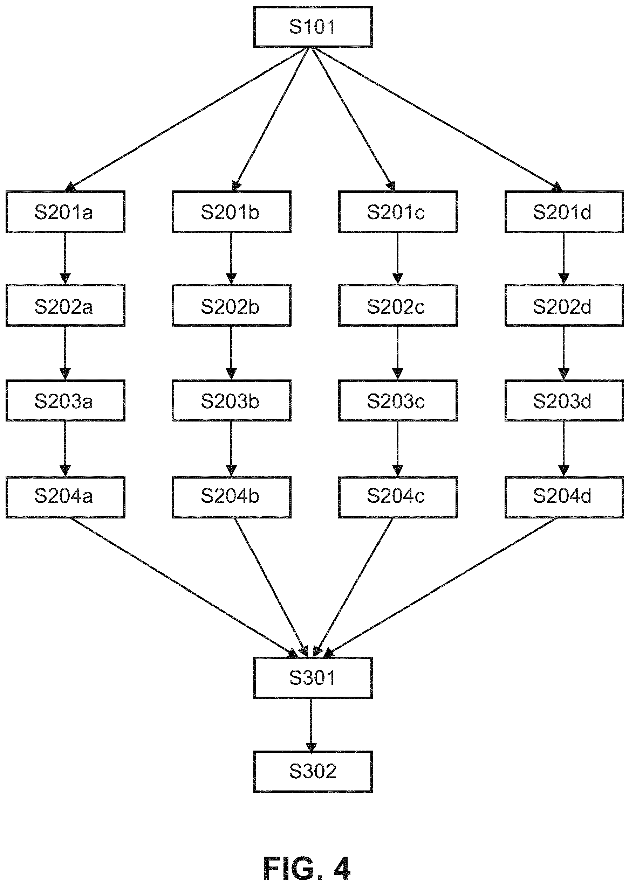

Fig. 4 represents a flow chart for a method for classifying a plurality of scatter kernels for one or more pixels using the system according to Fig. 3. In step S101, input unit 100 receives X-ray image data 10 comprising pixels 11, 12, 13 and 14.

In step 201a, the image data 10 is received at classifying unit 200a of classifier device 200'. Similarly, in step 201b, the image data 10 is received at classifying unit 200b, whereas the image data 10 is received at classifying unit 200c in step S201c and at classifying unit 200d in step S201d.

In the following, for sake of brevity, the steps performed at the individual classifying units are described in relation to classifying unit 200a. Classifying units 200b, 200c and 200d function accordingly.

In step S202a, classifying unit 200a determines a goodness of fit of each scatter kernel of the plurality of scatter kernels for pixel 11 and maps said goodness of fit to each scatter kernel of the plurality of scatter kernels.

In step S203a, classifying unit 200a compares the goodness of fit measure for each scatter kernel to a threshold value in order to generate a binary output indicative of the classification result to provide to output unit 300. Hereby, classifying unit 200a assigns a value of 1 to a particular scatter kernel for which the goodness of fit is below the threshold value, thereby indicating that this scatter kernel is good enough for scatter correction of pixel 11. Classifying unit 200a further assigns 0 to each scatter kernel having a goodness of fit above said threshold value, thereby indicating that this scatter kernel is not good enough for sufficient scatter correction, i.e. does not properly represent the scatter event in pixel 11. In step S204a, classifying unit 200a provides the resulting output indicative of the goodness of fit to output unit 300.

The same procedure is performed by classifying unit 200b for pixel 12 (steps S202b to S204b), classifying unit 200c for pixel 13 (steps S202c to S204c) and by classifying unit 200d for pixel 14 (steps S202d to S204d).

In step S301, output unit 300 receives, from classifying units 200a, 200b, 200c and 200d, the thus provided output indicative of the goodness of fit of the scatter kernels for each one of pixels 11, 12, 13 and 14 and generates a corresponding output vector for each pixel. That is, output unit 300 generates, for each pixel, a corresponding vector having an entry with a value of 1 for each scatter kernel which is suitable for scatter correction and an entry with a value of 0 for the scatter kernels that are not suitable. Hereby, output unit 300 generates a vector 31 for pixel 11, a vector 32 for pixel 12, a vector 33 for pixel 13 and a vector 34 for pixel 14. In step S302, output unit 300 outputs the plurality of vectors 31, 32, 33 and 34 as output 30. Based on this output, scatter kernel selection may be performed for each pixel by selecting, from the scatter kernels indicated with a value of 1, one scatter kernel at random.

Although in above described embodiments, the image data has been obtained using X-ray imaging, it shall be understood that, in other embodiments, the image data may also be retrieved using other imaging modalities likewise suffering from scatter.

It may further be understood that while in the above-cited embodiments, scatter correction has been performed using a classification system only, scatter correction may further be improved by using anti-scatter grids.

Although the scatter that is corrected for in the above-cited embodiments mostly corresponds to multiple scatter, it shall be understood that the neural network/deep learning approach described herein may also be used for picking scatter kernels in the case of single scatter only.

Although in the above-cited embodiments, the output comprises a plurality of vectors having binary entries, it shall be understood that the output may also comprise a single vector or a matrix or the like. It shall also be understood that the output may comprise entries that are not in binary terms, but may represent the probability of a scatter kernel being the best kernel, the goodness of fit of a scatter kernel or the like.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the receiving of the image data comprising the plurality of pixels, the classifying of a scatter kernel from a plurality of scatter kernels, the outputting of the classification result, the simulating of the training dataset, et cetera performed by one or several units or devices can be performed by any other number of units or devices. These procedures in accordance with the invention can hereby be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a classification system comprising an input unit for receiving image data comprising a plurality of pixels, a classifier device for classifying at least one pixel of the plurality of pixels based on one or more scatter properties of said at least one pixel, wherein the classifying comprises selecting a scatter kernel from a plurality of scatter kernels for said at least one pixel, and an output unit for outputting, for the at least one pixel, an indication of a classification result of said scatter classification.

By means of this system, an improved scatter correction may be achieved without having to first derive which scatter properties and/or detector properties need to be accounted for.

## Claims

1. A classification system (1) comprising:
an input unit (100) for receiving image data comprising a plurality of pixels;
a classifier device (200) for classifying at least one pixel of the plurality of pixels based on one or more scatter properties of said at least one pixel, wherein the classifying comprises selecting a scatter kernel from a plurality of scatter kernels for said at least one pixel; and
an output unit (300) for outputting, for the at least one pixel, an indication of a classification result of said scatter classification.

2. The classification system according to claim 1, wherein the image data is obtained using X-ray imaging.

3. The classification system according to claim 1, wherein the classifier device is configured to receive training data indicating a relation between each scatter kernel from the plurality of scatter kernels and the one or more scatter properties of said at least one pixel.

4. The classification system according to claim 3, wherein the training data and/or scatter kernel data is generated by simulating the scatter properties of said at least one pixel using a simulation of pencil beams.

5. The classification system according to claim 1, wherein the indication of the result of said scatter classification for the at least one pixel comprises a vector having, for each scatter kernel of the plurality of scatter kernels, an entry indicative of the classification result.

6. The classification system according to claim 5, wherein the entry indicative of the classification result indicates a goodness of fit for each scatter kernel to the one or more scatter properties of said at least one pixel.

7. The classification system according to claim 5, wherein the entry indicative of the classification result indicates a probability of the scatter kernel being the best scatter kernel to be applied to said at least one pixel.

8. The classification system according to claim 1, wherein the classifier device is trained to provide the classification result for each pixel of the plurality of pixels.

9. The classification system according to claim 1, wherein the classifier device comprises a plurality of classifying units, wherein each classifying unit is trained to provide the classification result for a particular pixel of the plurality of pixels.

10. The classification system according to claim 1, further configured to obtain an estimate of a scatter distribution for a particular detector type based on the plurality of scatter kernels selected for the plurality of pixels.

11. The classification system according to claim 1, wherein the plurality of scatter kernels comprises sphere scatter kernels and/or ellipse scatter kernels.

12. A classification method, comprising the steps of:
receiving image data comprising a plurality of pixels;
classifying at least one pixel of the plurality of pixels, based on one or more scatter properties of said at least one pixel, wherein the classifying comprises selecting a scatter kernel from a plurality of scatter kernels for said at least one pixel; and
outputting, for the at least one pixel, an indication of a classification result of said scatter classification.

13. The method according to claim 12, further comprising
training a classifier device with a relation between each scatter kernel from the plurality of scatter kernels and the one or more scatter properties of said at least one pixel.

14. A computer program for controlling a system according to anyone of claims 1 to 11, which, when executed by a processing unit, is adapted to perform the method according to anyone of claims 12 to 13.

15. A computer-readable medium having stored thereon the computer program according to claim 14.
